Europäisches Patentamt

(19) European Patent Office

Office européen des brevets

(11) Publication number: **0 081 649**
**B1**

(12) **EUROPEAN PATENT SPECIFICATION**

(45) Date of publication of patent specification: **14.01.87**

(21) Application number: **82109401.8**

(22) Date of filing: **11.10.82**

(51) Int. Cl.⁴: **G 03 F 7/26**, G 11 B 23/00

(54) Method for forming optical discs.

(30) Priority: **11.12.81 US 329800**

(43) Date of publication of application:
**22.06.83 Bulletin 83/25**

(45) Publication of the grant of the patent:
**14.01.87 Bulletin 87/03**

(84) Designated Contracting States:
**AT BE CH DE FR GB IT LI LU NL SE**

(56) References cited:
**FR-A-2 180 746**
**GB-A-1 280 625**
**CHEMICAL ABSTRACTS, vol. 96, no. 2, January 1982, page 421, no. 26370c, Columbus, Ohio, USA**
**KODAK PUBL.; (79), vol. G-49, No Kodak Microelectronics Semin. Proc., 1978, pages 78-85, G. MacBETH et al.: "Automated processing of positive photoresists"**
**OPTICS & LASER TECHNOLOGY, vol. 9, no. 4, August 1977, pages 169-174, Hawards Heath, G.B., P. PALERMO et al.: "Video disc mastering and replication"**

(73) Proprietor: **DISCOVISION ASSOCIATES**
**3300 Hyland Avenue**
**Costa Mesa California 92626 (US)**

(72) Inventor: **Wilkinson, Richard L.**
**21341 Avenida Manantial**
**El Toro California 92630 (US)**

(74) Representative: **Fleuchaus, Leo, Dipl.-Ing. et al**
**Fleuchaus & Wehser Melchiorstrasse 42**
**D-8000 München 71 (DE)**

(56) References cited:
**SOLID STATE TECHNOLOGY, vol. 24, no. 5, May 1981, pages 36-37, Port Washington, New York, USA, "Automatic developing of positive photoresists"**

**Description**

This invention relates to methods for producing optical disc masters and stampers used in forming optical disc replicas.

Optically-readable optical disc replicas are useful in storing vast quantities of information, usually in the form of a frequency-modulated (fm) optical signal, with a high recording density. The fm signal is typically stored in a surface of the replica as a sequence of spaced pits or bumps arranged in a succession of substantially circular and concentric recording tracks. Each pit and adjacent space between pits represent one cycle of the fm signal.

A recording master typically includes a glass substrate having a disc-shaped, planar surface, with a thin photoresist recording layer overlaying it. Information is recorded in the recording layer by focusing an intensity-modulated writing beam of light onto the layer using a radially-movable objective lens, as the master is rotated at a prescribed rate. The intensity of the beam is modulated in accordance with the fm signal such that it is alternately greater than or less than a predetermined recording threshold of the photoresist.

Disc-shaped stampers, for use in injection moulding optical disc replicas, are derived from the developed recording masters. In one known prior technique (FR—A—2 180 746 or JA—A—81/41 710) for making such stampers, a first metallic film having a uniform thickness of about 50 to 60 nm was vapor deposited onto the developed recording layer, in a chamber pressure of about $1{,}33 . 10^{-3}$ Pa. A second metallic film was thereafter electroplated onto the first film, and the two films together formed an integral metallic layer that could be separated from the underlying master recording. Residual photoresist material was removed from its undersurface using a suitable solvent to form the stamper. Both films were preferably formed of nickel.

Although the method described above has proven generally satisfactory as a part of an overall method of making optical disc replicas, these replicas sometimes provide playback signal-to-noise ratios that are lower than believed possible. The microscopic structures of these replicas are believed to differ somewhat from an ideal sequence of sharply defined pits. There is thus a need for improved methods for making optical discs having microscopic structures that conform better to an ideal sequence of sharply defined pits and thereby provide improved playback signal-to-noise ratios.

The vapor deposition of the first metallic film in a pressure of about $1{,}33 \times 10^{-4}$ Pa or less, however, below the pressure needed in the prior art method described ($1{,}33 \times 10^{-3}$ Pa), significantly reduces oxidation of the metallic material, which unexpectedly causes the stampers to have microscopic structures that deviated from the precise photoresist geometry. This reduction in pressure therefore enables the molding of replicas exhibiting a significantly higher signal-to-noise ratio during playback.

Other aspects and advantages of the invention will become apparent from the following detailed description, taken in conjunction with the accompanying drawings, which illustrate, by way of example, the principles of the invention.

FIGURE 1 is a simplified schematic diagram of apparatus for recording an fm information signal on an optical disc recording master having a photoresist recording layer;

FIGURE 2 in an enlarged plan view of a segment of the recording master of Fig. 1, after development, showing a succession of spaced pits arranged in a plurality of substantially circular and concentric recording tracks;

FIGURE 3 is a graph showing the modulated intensity of the writing beam in the recording apparatus of Fig. 1;

FIGURE 4 is a sectional, elevational view of a portion of the recording master, taken along a recording track and showing the photoresist recording layer to be exposed whenever the intensity of the writing beam of Fig. 3 exceeds a predetermined recording threshold;

FIGURE 5 is a sectional, elevational view of the recording master of Fig. 4, after development to remove the spaced, exposed regions; and

FIGURE 6 is a perspective view of a turntable apparatus used in developing the photoresist recording layer exposed by the apparatus of Fig. 1.

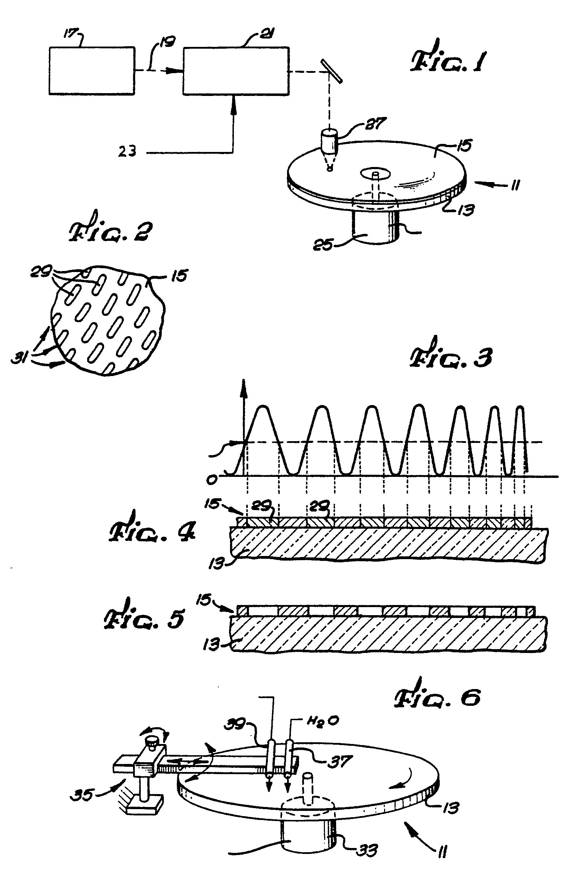

Referring now to the drawings, and particularly to Fig. 1, there is shown an apparatus for recording an fm information signal on an optical disc recording master 11. The master includes a glass substrate 13, with a smooth, planar upper surface on which is deposited a photoresist recording layer 15 having a uniform thickness of about 115 to 135 nm. The recording layer is exposed whenever impinged by a beam of light having an intensity that exceeds a predetermined recording threshold.

The recording apparatus includes a writing laser 17 for producing a writing beam of light 19 having a prescribed intensity, and an intensity modulator 21 for modulating the intensity of the writing beam in accordance with an fm information signal supplied on line 23. The recording apparatus further includes a spindle motor 25 for rotating the recording master 11 at a prescribed angular velocity, and an objective lens 27 for focusing the intensity-modulated beam onto the recording layer 15 of the rotating master 11. The objective lens is mounted on a carriage (not shown) that is radially movable with respect to the master, so that the focused beam traces a spiral pattern on the recording layer.

As shown in Figs. 3 and 4, the intensity of the intensity-modulated beam 19 is alternately greater than or less than the predetermined recording threshold of the photoresist recording layer 15. This produces a succession of spaced exposed regions 29 arranged in a plurality of substantially circular and concentric recording tracks 31 in the layer. Each exposed region and adjacent space correspond to one cycle of the fm signal. Figs. 2 and 5 depict the recording master 11 after development to remove the exposed regions, the master then being in suitable condition for use in producing a stamper.

The recording master 11 is initially prepared for use with the recording apparatus of Fig. 1 using a special process in which the upper surface of the glass subtrate 13 is first ground, polished and cleaned. The photoresist recording layer 15 is then formed by dispensing a photoresist solution onto the surface, as it is rotated at a velocity of about 75 to 100 rpm. The photoresist solution is preferably prepared by diluting Shipley AZ 1350 photoresist with Shipley AZ thinner, in a ratio of about 3 to 1. This provides a solution viscosity of about 1.3 centipoise. The specific viscosity and angular velocity are carefully selected to provide the layer with its prescribed, uniform thickness across its entire surface. After drying and baking, the recording master is in suitable condition for recording.

After the fm information signal is recorded in the photoresist recording layer 15 by the recording apparatus of Fig. 1, as described above, the exposed layer is developed using a special developing process. This converts each recording track into a succession of spaced pits of uniform depth and width and of continuously-variable length.

In the developing process, the exposed recording master 11 is rotated by a turntable apparatus as shown in Fig. 6, and fluids are dispensed onto the rotating master in a prescribed fashion. The turntable apparatus includes a variable speed motor 33 for rotating the master at a selected velocity, and a pivot arm 35 carrying two dispensing tubes 37 and 39 for dispensing de-ionized water and developer solution, respectively, in a prescribed sequence. The de-ionized water preferably has a resistance exceeding about 18 mega-ohms per square centimeter. The developer solution is an inorganic alkali such as potassium hydroxide, sodium hydroxide or trisodium phosphate, preferably an AZ developer solution, which is believed to be principally trisodium phosphate.

As the motor 33 rotates the recording master 11 at about 75 to 100 rpm, water is first dispensed through the tube 37 to pre-wet the recording layer 15, after which both water and developer solution are dispensed through the tubes 37 to 39 for about 5 to 10 seconds to partially develop the layer. Developer solution alone is then dispensed through the tube 39 to fully develop the layer, and, finally, water is again dispensed through the tube 37 to rinse away residual developer solution. The motor speed is then increased to about 750 to 1000 rpm, to dry the developed recording layer.

The AZ developer solution has a normality of only about 0.14 to 0.16 and is dispensed onto the layer for a relatively long duration of about 60 seconds. This substantially slows down the development of the exposed photoresist recording layer 15 over known prior developing processes, including the development process recommended by the manufacture of Shipley photoresist. A slower development has been found to provide pits having unexpectedly steeper sidewalls, which permits the eventual molding of disc replicas having higher signal-to-noise ratios during playback.

The next step in the optical disc manufacturing process is to use the developed recording master 11 to produce a stamper suitable for use in molding optical disc replicas. The stamper is produced by first vapor depositing a uniform metallic film of about 50 to 60 nm thickness onto the developed recording layer 15, and then electroplating a second uniform metallic film of about 0.38 mm thickness onto the first film. The undersurface of the first film conforms to the pattern of spaced pits formed in the photoresist layer, and the two films together form an integral metallic layer. This integral metallic layer can be separated from the underlying recording master and residual photoresist material removed using a suitable photoresist thinner, thereby forming the stamper. In the preferred embodiment, both metallic films are formed of nickel.

In accordance with the present invention, the first metallic film is vapor deposited in a pressure of about $1,33 \times 10^{-4}$ Pa or less. This pressure is an order of magnitude lower than that which was previously thought to be necessary for forming stampers. It significantly reduces oxidation of the deposited metallic material, which was found to be an unexpected source of microscopic deviations between the stamper geometry and the photoresist geometry. This reduction in pressure therefore enables the molding of replicas exhibiting a significantly higher signal-to-noise ratio during playback.

It should be appreciated from the foregoing description that the present invention provides an improved method for forming optical discs, which result in disc replicas having substantially higher playback signal-to-noise ratio. After a photoresist development process that yields developed recording masters having spaced information-bearing pits with unexpectedly steeper sidewalls, the method of the invention forms metallic stampers using an initial vapor deposition step carried out in an extremely low pressure, to reduce oxidation and thereby unexpectedly improve conformity between the stamper geometry and the photoresist geometry.

Although the invention has been described in detail with reference to the present preferred embodiments, it should be understood by one or ordinary skill in the art that various modifications can be made without departing from the scope of the invention. Accordingly, it is not intended that the invention be limited, except as by the appended claims.

**Claim**

A method for forming a stamper for use in molding optical disc replicas, comprising the steps of:

forming a disc-shaped master recording (11) that includes a glass substrate (13) and a thin recording layer (15), an information signal being recorded in the recording layer (15) in a sequence of spaced pits (29) arranged in a plurality of substantially circular and concentric recording tracks (31); vapor depositing a first thin, uniform, metallic film on the recording layer of the master recording; electroplating a second thin, uniform, metallic film onto the first film, the first and second films together forming an integral, metallic layer; separating the metallic layer from the underlying master recording; and removing residual recording layer material from the undersurface of the separated metallic layer, to form a stamper suitable for use in molding optical disc replicas, and characterized by the initial vapor depositing step occurring in a pressure of about $1.33 \times 10^{-4}$ pascals or less.

**Patentanspruch**

Ein Verfahren zur Herstellung eines Stempels zur Verwendung beim Formen von Vervielfältigungsstücken von Bildplatten, in dem die Schritte enthalten sind:

Ausbilden einer scheibenförmigen Masteraufzeichnung (11), die ein Glassubstrat (13) und eine dünne Aufzeichnungsschicht (15) enthält, wobei ein Informationssignal in der Aufzeichnungsschicht (15) in einer Folge von in Abständen angeordneten Vertiefungen (29) aufgezeichnet wird, die in einer Vielzahl von im wesentlichen kreis-förmigen und konzentrischen Aufzeichnungs-spuren (31) angeordnet sind; Aufdampfen eines ersten dünnen gleichförmigen metallischen Films auf der Aufzeichnungsschicht der Masteraufzeichnung; galvanisches Auftragen eines zweiten dünnen gleichförmigen metallischen Films auf den ersten Film, wobei der erste und der zweite Film zusammen eine integrale metallische Schicht bilden; Trennen der metallischen Schicht von der darunterliegenden Masteraufzeichnung; und Ent-fernen verbleibenden Materials der Aufzeich-nungsschicht von der unteren Oberfläche der getrennten Metallschicht, um einen Stempel zu bilden, der zum Einsatz beim Formen von Vervielfältigungsstücken von Bildplatten geeignet ist und dadurch gekennzeichnet, daß der anfängliche Aufdampfschritt bei einem Druck von ungefähr $1,33 \times 10^{-4}$ Pascal oder weniger erfolgt.

**Revendication**

Méthode pour former un poinçon à utiliser dans le moulage de répliques de disques optiques, comprenant les étapes de:

former un enregistrement principal (11) en forme de disque qui comprend un substrat en verre (13) et une couche mince d'enregistrement (15), un signal d'information étant enregistré dans la couche d'enregistrement (15) en une séquence de creux espacés (29) agencés en un certain nombre de pistes sensiblement circulaires et concentriques d'enregistrement (31); déposer à la vapeur un premier film métallique uniforme et mince sur la couche d'enregistrement de l'enregistrement principal; plaquer électrolytiquement un second film métallique mince sur le premier film, les premier et second films formant ensemble une couche métallique en une pièce; séparer la couche métallique de l'enregistrement principal sous-jacent; et retirer le matériau résiduel de la couche d'enregistrement de la surface inférieure de la couche métallique séparée, pour former un poinçon approprié à une utilisation pour le moulage de répliques de disques optiques, et caractérisée par une étape initiale de dépôt à la vapeur se produisant à une pression d'environ $1,33 \times 10^{-4}$ pascal ou moins.

Fig. 1

Fig. 2

Fig. 3

Fig. 4

Fig. 5

Fig. 6